# FASCICULE DE BREVET EUROPEEN

(11) **EP 1 090 730 B1**
(45) Date de publication et mention de la délivrance du brevet: **14.04.2004**
(21) Numéro de dépôt: 00870001.5
(22) Date de dépôt: 04.01.2000
(51) Int. Cl.: B29C 45/00

(54) **Procédé de moulage par injection**
Spritzgiessverfahren
Injection moulding process

(43) Date de publication de la demande: 11.04.2001
(73) Titulaire: Artalu-Vesni Plastics N.V., 9031 Drongen (BE)
(72) Inventeur: Wibo, Yves, 9831 Deurle St. Martens Latem (BE)
(74) Mandataire: De Vleeschauwer, Natalie

(56) Documents cités:
- DE-A- 19 927 477
- PATENT ABSTRACTS OF JAPAN vol. 1995, no. 05, 30 juin 1995 (1995-06-30) & JP 07 052199 A (OKI ELECTRIC IND CO LTD), 28 février 1995 (1995-02-28)

## Description

La présente invention concerne un procédé de moulage par injection pour la fabrication d'un cadre en matière plastique.

Le cadre est typiquement un encadrement de photo, affiche, miroir, etc.

Il est connu de fabriquer de tels cadres par moulage par injection.

Le moulage par injection est une méthode de moulage de matière plastique selon laquelle la matière plastique est injectée dans le moule. La matière plastique coule du canal d'alimentation, au travers de l'entrée de l'empreinte vers le moule dont elle remplit toutes les cavités. On laisse la matière plastique solidifier, avant de l'éjecter du moule.

Le produit ainsi obtenu comporte d'une part le moulage même et la carotte, c'est-à-dire la matière plastique qui s'est solidifiée dans le canal d'alimentation. Après démoulage, la carotte est séparée du restant du produit.

Le procédé de moulage par injection est peu onéreux et permet la fabrication en grandes quantités de cadres de formes diverses.

Lors de l'injection de la matière plastique dans le moule, la masse injectée se divise en deux flux que remplissent chacun un conduit du moule pour ensuite se rencontrer dans le moule à l'opposé de l'entrée de l'empreinte.

Le cadre ainsi obtenu contient toujours une ligne de soudure. Par linge de soudure, on entend la ligne de rencontre de deux flux de matières plastique. La ou les lignes de soudure peuvent être visibles ou, de préférence, invisibles.

Les cadres obtenus par injection par moulage n'ont pas toujours un aspect esthétique satisfaisant.

En effet, on observe une orientation perturbée de la matière plastique à l'endroit où les deux flux se rencontrent. Sur le plan esthétique, cette orientation perturbée de la matière se manifeste par des lignes d'écoulement ou de flux visible ou encore des turbulences visibles. Ceci est notamment apparent quand la matière plastique contient des particules visibles, telles qu'une poudre métallique, du strass, etc.

Pour résoudre ce problème, il existe plusieurs solutions.

Il est connu de former, par injection ou par extrusion, des pièces (rectilignes) sans ligne de soudure, qu'on découpe et assemble ensuite sous forme de cadre.

Il est également connu de couvrir le cadre obtenu par moulage par injection d'une couche décorative par projection au pistolet, métallisation sous vide, pulvérisation cathodique, galvanoplastic, dépôt chimique.

Chacun des procédés susmentionnés nécessite une main d'oeuvre considérable. Leur domaine d'application est souvent limité et l'aspect esthétique obtenu n'est pas toujours satisfaisant.

Le but de la présente invention est de mettre au point un procédé de moulage par injection ne présentant pas les désavantages susmentionnés.

La présente invention concerne un procédé de moulage par injection pour la fabrication d'un cadre anguleux en matière plastique.

Le procédé suivant l'invention est utile pour la fabrication de cadres anguleux de formes diverses. Il s'agit typiquement de cadres polygonaux, tels que des cadres rectangulaires, hexagonaux, octogonaux, etc.

Par "cadre anguleux", on entend un cadre dont le contour présente au moins un premier et un deuxième coin. Un tel cadre peut, par exemple, avoir une forme polygonale, mais également la forme d'un coeur.

Dans le procédé suivant l'invention, on utilise un moule présentant au moins un premier coin, correspondant au premier coin du cadre, et un deuxième coin, correspondant au deuxième coin du cadre:

Le premier coin du moule est lié au deuxième coin du moule par deux conduits distincts.

Les deux conduits distincts correspondent ensemble au volume et à la forme du cadre à fabriquer.

Le procédé suivant l'invention comporte les étapes classiques du moulage par injection, c'est-à-dire :
i) l'injection d'une massé de matière plastique dans le moule par une entrée de l'empreinte de manière à remplir le moule,
ii) la solidification de la masse de matière plastique injectée dans le moule, et
iii) le démoulage de la masse solidifiée.

L'injection de la masse de matière plastique dans le moule se fait par une entrée de l'empreinte dans le premier coin du moule. La masse se divise en un premier flux et un deuxième flux remplissant respectivement le premier et le deuxième conduit du moule.

Le procédé suivant l'invention se distingue des procédés connus en ce que
i) le moule comprend en outre une cavité qui communique par un canal avec le deuxième coin.
ii) la section transversale des deux conduits est conçue de manière à ce que le premier et le deuxième flux se recombinent à proximité du deuxième coin avant de remplir la cavité, et
iii) après démoulage, on sépare du cadre la masse solidifiée formée dans le canal et la cavité.

L'usage d'un moule ayant une cavité est connu de la publication JP-07 052 199 A (OKI ELECTIC IND CO LTD). Toutefois, ce document se distingue de la présente invention en ce que la cavité est remplie avant que les flux se recombinent et non pas après recombinaison des flux.

De cette façon, la zone peu esthétique située autour de la ligne de soudure dans laquelle la matière plastique présente une orientation perturbée passe dans la cavité communiquant avec le deuxième coin et est ensuite sectionnée du reste du cadre.

Le cadre à fabriquer présente une face avant et un dos. On entend par face avant la face (souvent esthétiquement profilée) du cadre qui reste visible lorsque le cadre est mis en place (par exemple suspendu au mur). Le dos du cadre est alors la surface invisible.

De préférence, le canal qui lie la cavité au deuxième coin est situé à un endroit du moule qui correspond au dos du cadre.
Il est également souhaitable que l'entrée de l'empreinte se situe à un endroit du moule qui correspond au dos du cadre.

De cette façon, lorsque le cadre est mis en place, le point de sectionnement de la masse solidifiée dans le canal et la cavité et le point de sectionnement de la carotte ne sont pas visibles.

L'invention est particulièrement utile lorsque des charges solides sont réparties dans la masse de matière plastique. Il s'agit en particulier de charges solides qui ont été ajoutées afin d'obtenir un effet décoratif dans le cadre obtenu. De telles charges solides sont notamment :les poudres métalliques, le strass ou un mélange de poudre métallique et de colorant.

Le procédé suivant l'invention peut être appliqué avec toute matière plastique susceptible d'être moulée par injection.

Ces matières plastiques sont, par exemple, le polystyrène (PS), l'ABS ou le polypropylène (PP).

Afin de limiter le volume nécessaire de la cavité, il est souhaitable que les deux flux se recombine à un endroit aussi proche que possible du deuxième coin du moule.

A cette fin, il est conseillé de faire quelques tests d'injection par moulage avant de fabriquer le moule définitif.

Si, lors de ces tests, on constate que les deux flux de matière plastique se recombinent à une certaine distance du deuxième coin, par exemple dans le premier conduit, on peut corriger cette situation en :
a) modifiant la section transversale du premier conduit (sur toute la longueur ou sur une partie dudit premier conduit), de manière à accélérer le flux de la matière plastique dans le premier conduit et/ou
b) modifiant la section transversale du deuxième conduit (sur toute la longueur ou sur une partie dudit deuxième conduit), de manière à ralentir le flux de la matière plastique dans le deuxième conduit

## Revendications

1. Procédé de moulage par injection pour la fabrication d'un cadre anguleux en matière plastique
procédé selon lequel
on utilise un moule présentant au moins un premier coin et un deuxième coin, correspondant respectivement à un premier et un deuxième coin du cadre à fabriquer,
le premier coin du moule étant lié au deuxième coin du moule par deux conduits distincts correspondants ensemble au volume et à la forme du cadre à fabriquer,
le procédé comprenant les étapes
i) d'injection d'une masse de matière plastique dans le moule par une entrée de l'empreinte située dans le premier coin, de manière à ce que la masse se divise en un premier flux et un deuxième flux remplissant respectivement le premier et le deuxième conduit,
ii) de solidification de la masse de matière plastique injectée , et
iii) de démoulage de la masse solidifiée,
**caractérisé en ce que**,
le moule comprend en outre une cavité communiquant par un canal avec le deuxième coin,
- la section transversale des deux conduits est conçue de manière à ce que le premier et le deuxième flux se recombinent à proximité du deuxième coin avant de remplir la cavité, après démoulage, on sépare du cadre la masse solidifiée formée dans le canal et la cavité.

2. Procédé suivant la revendication 1 ou 2, selon lequel le cadre à fabriquer se compose d'une face avant et d'un dos, le canal étant situé dans le deuxième coin à un endroit correspondant au dos du cadre.

3. Procédé suivant la revendication 1 ou 2, selon lequel le cadre à fabriquer se compose d'une face avant et d'un dos, l'entrée de l'empreinte étant située dans le premier coin à un endroit correspondant au dos du cadre.

4. Procédé suivant l'une quelconque des revendications précédentes, selon lequel des charges solides sont réparties dans la masse de matière plastique.

5. Procédé suivant la revendication 4, selon lequel les charges solides comprennent un ou plusieurs éléments choisis parmi : les poudres métalliques, le strass ou un mélange de poudre métallique et de colorant.

6. Procédé suivant l'une quelconque des revendications précédentes, selon lequel la matière plastique est choisie parmi le groupe comprenant le polystyrène (PS), l'ABS et le polypropylène (PP).

7. Procédé suivant l'une quelconque des revendications précédentes, selon lequel le cadre à fabriquer est polygonal.

## Patentansprüche

1. Spritzgießverfahren zum Herstellen eines gewinkelten Rahmens aus Kunststoff,
Verfahren, bei dem
man eine Form verwendet, die wenigstens eine erste Ecke und eine zweite Ecke aufweist, jeweils entsprechend einer ersten und einer zweiten Ecke des herzustellenden Rahmens,
wobei die erste Ecke der Form mit der zweiten Ecke der Form über zwei getrennte Leitungen verbunden ist, die gemeinsam dem Volumen und der Form des herzustellenden Rahmens entsprechen,
wobei das Verfahren die Stufen umfaßt,
i) Einspritzen einer Kunststoffmasse in die Form durch einen Eingang des Nestes, der in der ersten Ecke angeordnet ist, derart, daß sich die Masse in einen ersten Strom und einen zweiten Strom unterteilt, die jeweils die erste und die zweite Leitung füllen,
ii) Verfestigung der eingespritzten Kunststoffmasse und
iii) Entformen der verfestigten Masse,
**dadurch gekennzeichnet, daß**
die Form zusätzlich einen Hohlraum aufweist, der mit der zweiten Ecke über einen Kanal in Verbindung steht,
- wobei der Querschnitt der zwei Leitungen derart gewählt ist, daß sich der erste und der zweite Strom in der Nähe der zweiten Ecke vereinigen, bevor sie den Hohlraum füllen,
daß man nach dem Entformen die verfestigte Masse, die sich in dem Kanal und in dem Hohlraum gebildet hat, vom Rahmen abtrennt.

2. Verfahren nach Anspruch 1 oder 2, bei dem sich der herzustellende Rahmen aus einer Vorderseite und einer Rückseite zusammensetzt, und der Kanal in der zweiten Ecke an einer Stelle angeordnet ist, die der Rückseite des Rahmens entspricht.

3. Verfahren nach Anspruch 1 oder 2, bei dem sich der herzustell'ende Rahmen aus einer Vorderseite und einer Rückseite zusammensetzt, und der Eingang des Nestes in der ersten Ecke an einer Stelle angeordnet ist, die der Rückseite des Rahmens entspricht.

4. Verfahren nach einem der vorhergehenden Ansprüche, bei dem in der Kunststoffmasse feste Füllstoffe verteilt werden.

5. Verfahren nach Anspruch 4, bei dem die festen Füllstoffe ein oder mehrere Elemente umfassen, ausgewählt aus: Metallpulvern, Straß oder einer Mischung aus Metallpulver und Farbstoff.

6. Verfahren nach einem der vorhergehenden Ansprüche, bei dem der Kunststoff ausgewählt ist aus der Gruppe umfassend Polystyrol (PS), ABS und Polypropylen (PP).

7. Verfahren nach einem der vorhergehenden Ansprüche bei dem der herzustellende Rahmen polygonal ist.

## Claims

1. Injection moulding method for manufacturing an angular frame made from plastics material
a method according to which
a mould is used having at least a first corner and a second corner, corresponding respectively to first and second corners of the frame to be manufactured,
the first corner of the mould being connected to the second corner of the mould by two distinct conduits corresponding together to the volume and shape of the frame to be manufactured,
the method comprising the steps of
i) injection of a mass of plastics material into the mould through a mould recess inlet situated in the first corner, so that the mass is divided into a first flow and a second flow filling respectively the first and second conduits,
ii) solidification of the mass of plastics material injected, and
iii) removal of the solidified mass from the mould,
**characterised in that**
the mould also comprises a cavity communicating with the second corner through a channel,
- the transverse section of the two conduits is designed so that first and second flows combine close to the second corner before filling the cavity,
after removal from the mould, the solidified mass formed in the channel and cavity is separated from the frame.

2. Method according to claim 1 or 2, according to which the frame to be manufactured is composed of a front face and a back, the channel being situated in the second corner at a point corresponding to the back of the frame.

3. Method according to claim 1 or 2, according to which the frame to be manufactured is composed of a front face and a back, the inlet to the mould recess being situated in the first corner at a point corresponding to the back of the frame.

4. Method according to any one of the preceding claims, according to which solid fillers are distributed in the mass of the plastics material.

5. Method according to claim 4, according to which the solid fillers comprise one or more elements chosen from amongst: metallic powders, strass or a mixture of metallic powder and dye.

6. Method according to any one of the preceding claims, according to which the plastics material is chosen from amongst the group comprising polystyrene (PS), ABS and polypropylene (PP).

7. Method according to any one of the preceding claims, according to which the frame to be manufactured is polygonal.
